# EUROPÄISCHE PATENTSCHRIFT

(11) **EP 4 388 049 B1**
(45) Veröffentlichungstag und Bekanntmachung des Hinweises auf die Patenterteilung: **07.10.2026**
(21) Anmeldenummer: 22768648.2
(22) Anmeldetag: 19.08.2022
(51) Int. Cl.: C09D 5/00, C09D 5/02

(54) **BESCHICHTUNGSSTOFF**
COATING MATERIAL
MATÉRIAU DE REVÊTEMENT

(30) Priorität: 20.08.2021 DE 102021121675
(43) Veröffentlichungstag der Anmeldung: 26.06.2024
(73) Patentinhaber: Brillux GmbH & Co. KG, 48163 Münster (DE)
(72) Erfinder: GERWING, Thorsten, 48720 Rosendahl (DE); LEUSMANN, Jan, 48301 Nottuln (DE)
(74) Vertreter: Cohausz & Florack
(86) Internationale Anmeldenummer: PCT/EP2022/073159
(87) Internationale Veröffentlichungsnummer: WO 2023/021177

(56) Entgegenhaltungen:
- EP-A1- 3 505 575
- EP-A1- 3 561 005
- EP-A1- 3 741 813
- DE-A1- 102004 054 048

## Beschreibung

Die vorliegende Erfindung betrifft einen Beschichtungsstoff, ein Verfahren zur Herstellung eines Beschichtungsstoffes, einen Anstrich auf einer Substratoberfläche, die Verwendung eines Beschichtungsstoffes, sowie die Verwendung einer Mischung von Wasserglas und Kieselsol zur Erhöhung der Lagerstabilität von Beschichtungsstoffen.

Beschichtungsstoffe sind Produkte, die, auf einen Untergrund aufgetragen, eine haftende Beschichtung mit schützenden, dekorativen und/oder anderen spezifischen Eigenschaften ergeben. Für die Beschichtung von Untergründen sind unterschiedliche Beschichtungsstoffe bekannt. Landläufig kommen in Beschichtungsstoffen organische Filmbildner zum Einsatz. Diese werden dabei entweder aus petrochemischen Rohstoffen synthetisiert oder in jüngster Vergangenheit auch zunehmend aus alternativen und nachwachsenden Kohlenstoffquellen auf Pflanzenbasis hergestellt. Beide Rohstoffquellen bringen entscheidende Nachteile mit sich. Petrochemische Rohstoffe tragen einen entscheidenden Teil zur Klimaerwärmung bei, während nachwachsende Rohstoffe einen erheblichen Teil an Nutzfläche binden, die zur Nahrungsproduktion benötigt wird.

Aus dem Stand der Technik sind zur Beschichtung von mineralischen Untergründen im Wesentlichen drei Gruppen von Beschichtungsstoffen bekannt: Silikon-, Silikat- und Dispersionsfarben. Nach DIN 18 363, Abs. 2.4.1 lassen sich Silikatfarben prinzipiell in zwei Gruppen einteilen. Erstens Zweikomponenten-Silikatfarben (2K-, auch Reinsilikatfarben genannt) aus Kaliwasserglas, Pigmenten und Füllstoffen. Sie enthalten keine organischen Bestandteile. Zweitens die sogenannten Dispersions-Silikatfarben, die im Gegensatz zu reinen Silikatfarben eine geringe Menge organischer Bestandteile enthalten, um die Stabilität des Wasserglassystems zu erhöhen.

DE 103 09 404 A1 beschreibt eine Dispersionsfarbe enthaltend 3 bis 18 Gew.-% Polymerdispersion, 20 bis 60 Gew.-% Pigment und/oder Füllstoff, mehr als 2 bis 4,5 Gew.-% Wasserglas und zu 100 Gew.-% ergänzte Anteile an Wasser. Von Nachteil ist bei einer solchen Dispersionsfarbe, dass Sie einen hohen Anteil organischer Bestandteile und damit hohe CO₂-Emissionen aufweist. Zudem werden für die Polymerdispersion Kohlenstoffquellen benötigt, die entweder aus petrochemischen Rohstoffen stammen und/oder einen erheblichen Teil (landwirtschaftlicher) Nutzfläche binden.

EP 3 741 813 A1 beschreibt eine wässrige Beschichtungsmasse mit einem pH-Wert im Bereich von 10,0 bis 12,5, enthaltend oder bestehend aus a) mindestens einem polymeren organischen Bindemittel, b) mindestens einem silikatischen Füllstoff b1) und/oder mindestens einen calcitischen Füllstoff b2), c) mindestens einem Pigment, d) mindestens einem Alkylalkoxysilan, Alkylalkoxysiloxan und/oder Alkylsilikonat, und e) mindestens einem Additiv sowie f) gegebenenfalls mindestens einen Leichtfüllstoff, insbesondere in Form polymerer Hohlkörper.

EP 3 561 005 A1 beschreibt eine wässrige, im Wesentlichen organische Topfkonservierungsmittel-freie Beschichtungsmasse mit einem pH-Wert im Bereich von 10,0 bis 12,0, enthaltend oder bestehend aus a) mindestens einem polymeren organischen Acrylat-basierten Bindemittel auf Dispersionsbasis, b) mindestens einer Base, c) mindestens einem Rheologiemodifizierungsmittel, d) mindestens einem die Lagerfähigkeit der wässrigen Beschichtungsmasse steigernden Stabilisator, insbesondere umfassend oder bestehend aus mindestens einer wasserlöslichen organischen Stickstoffverbindung, und e) mindestens einem Additiv.

EP 3 505 575 A1 beschreibt einen Beschichtungsstoff enthaltend mehrere Füllstoffe, mindestens ein organisches Bindemittel, kein Titandioxid oder Titandioxid in einem Anteil kleiner 1 Gew.-%, bezogen auf das Gesamtgewicht des Beschichtungsstoffes und mindestens ein Additiv. Der Beschichtungsstoff kann weiterhin Wasserglas und/oder Kieselsol oder ein Pigment, das nicht Titandioxid ist, enthalten.

DE 10 2004 054048 A1 offenbart eine wässrige Beschichtungsmasse, enthaltend a) Partikel, mit einer mittleren Teilchengröße ≥10 nm und ≤500 nm, welche aus Polymerisat und feinteiligem anorganischem Feststoff aufgebaut sind (Kompositpartikel) sowie b) wenigstens ein pulverförmiges Pigment, ausgewählt aus der Gruppe umfassend Zinkoxid, Zinksulfid, Eisen-(III)-oxid, Zinndioxid sowie Titandioxid in der Rutil-, Anatas- und Brookit-Modifikation.

Rein "anorganische" Zweikomponenten-Silikatfarben haben hingegen die Nachteile einer begrenzten Haltbarkeit und unzureichender Haftung insbesondere auf nicht verkieselungsfähigen Untergründen. Solche Silikatfarben erhärten durch Verkieselung. Bei diesem Vorgang entsteht aus dem wasserlöslichen Kaliwasserglas ein wasser- und säurebeständiges, glasartiges Bindemittel. Bei der Verkieselung erfolgt die Anbindung an den silikatischen Untergrund. Die aus dem Zweikomponenten-System hergestellte Mischung ist nicht lagerstabil. Einmal angemischt, muss die Farbe innerhalb einer kurzen Zeitspanne verarbeitet werden. Zudem ist der Mischvorgang besonders sorgfältig auszuführen, da sonst die Qualität der Farbe leidet.

Die Aufgabe der Erfindung bestand daher darin, einen Beschichtungsstoff bereitzustellen, der einen oder mehrere Nachteile des Stands der Technik zumindest teilweise überwindet. Dabei soll ein erfindungsgemäßer Beschichtungsstoff möglichst gleichzeitig eine niedrige CO₂-Bilanz aufweisen, bei seiner Herstellung wenige oder keine fossilen bzw. kohlenstoffbasierten Rohstoffe verbrauchen und eine hohe Lagerstabilität aufweisen. Weiter soll der Beschichtungsstoff möglichst gute Verarbeitungseigenschaften aufweisen. Ferner sollen aus dem Beschichtungsstoff hergestellte Anstriche möglichst eine hohe Scheuerbeständigkeit aufweisen.

Eine weitere Aufgabe der vorliegenden Erfindung war es, ein Verfahren bereitzustellen, mit dem ein Beschichtungsstoff mit den beschriebenen Eigenschaften hergestellt werden kann. Insbesondere soll das Verfahren schnell und effizient durchzuführen sein.

Alle oder einige dieser Aufgaben werden erfindungsgemäß durch einen Beschichtungsstoff gemäß Anspruch 1, ein Verfahren gemäß Anspruch 11, einen Anstrich gemäß Anspruch 13, eine Verwendung gemäß Anspruch 14 sowie eine Verwendung gemäß Anspruch 15 gelöst.

Vorteilhafte Ausgestaltungen der Erfindung sind in den abhängigen Ansprüchen angegeben und werden nachfolgend im Einzelnen erläutert.

Die Erfindung stellt einen Beschichtungsstoff bereit, enthaltend, jeweils bezogen auf das Gesamtgewicht des Beschichtungsstoffes, 5 bis 90 Gew.-% Füllstoff und/oder Pigment, 0,5 bis 25 Gew.-% Wasserglas (Feststoffanteil), 0,5 bis 25 Gew.-% Kieselsol (Feststoffanteil) und Wasser, wobei der Beschichtungsstoff weniger als 3 Gew.-% organische Bestandteile, bezogen auf das Gesamtgewicht des Beschichtungsstoffes, enthält und wobei das Wasserglas ein Molverhältnis von SiO₂ zu Alkalioxid von 2,2 zu 1 bis 4,0 zu 1 aufweist.

Überraschend hat sich gezeigt, dass der erfindungsgemäße Beschichtungsstoff geringe CO₂-Emissionen aufweist, bei seiner Herstellung wenige oder keine fossilen Rohstoffe und wenige oder keine kohlenstoffbasierten Rohstoffe benötigt werden und er dennoch eine hohe Lagerstabilität aufweist. Ohne an eine bestimmte wissenschaftliche Theorie gebunden sein zu wollen, scheint sich die hohe Lagerstabilität trotz des geringen Anteils organischer Bestandteile auf Wechselwirkungen zwischen dem Wasserglas und dem Kieselsol zurückführen zu lassen.

Versuche haben zudem gezeigt, dass der erfindungsgemäße Beschichtungsstoff eine gute Verarbeitbarkeit aufweist und dass aus dem Beschichtungsstoff Anstriche hergestellt werden können, die eine hohe Scheuerbeständigkeit aufweisen, insbesondere die in die Scheuerklassen 1, 2 und/oder 3 nach DIN EN 13300 (Abs. 5.4 *"Nassabriebbeständigkeit"*) eingestuft werden können.

Der erfindungsgemäße Beschichtungsstoff enthält, bezogen auf das Gesamtgewicht des Beschichtungsstoffes, 5 bis 90 Gew.-% Füllstoff und/oder Pigment. Vorzugsweise enthält der erfindungsgemäße Beschichtungsstoff Füllstoff und Pigment.

Gemäß einer bevorzugten Ausführungsform enthält der erfindungsgemäße Beschichtungsstoff, jeweils bezogen auf das Gesamtgewicht des Beschichtungsstoffes, 5 bis 70 Gew.-%, insbesondere 10 bis 55 Gew.-% oder 15 bis 40 Gew.-% Füllstoff. Bevorzugt ist der Füllstoff ausgewählt aus der Gruppe bestehend aus Dolomit, Bariumsulfat, Feldspat, Quarz, Calciumcarbonat, Glimmer, Kaolin, kalziniertem Kaolin, Talkum, Diatomeenerde und Mischungen davon. Calciumcarbonat kann dabei in verschiedener Form, beispielsweise in Form von Kreide oder Calcit eingesetzt werden. Insbesondere kann der Füllstoff auch mehrere Calciumcarbonate mit verschiedenen Partikelgrößen umfassen. Besonders bevorzugt ist der Füllstoff eine Mischung aus mindestens Calciumcarbonat und kalziniertem Kaolin. Derartige Füllstoffe ergeben Beschichtungsstoffe mit einer besonders guten Verarbeitbarkeit.

Praktische Versuche haben ergeben, dass Beschichtungsstoffe, die besonders homogene Beschichtungen ergeben, erhalten werden, wenn das Füllstoffpacket unter Berücksichtigung der optimalen Packungsdichte formuliert wurde. Verfahren zur Bestimmung der Partikelgröße sind dem Fachmann bekannt. Beispielsweise kann die Partikelgröße mittels Grindometer nach DIN EN ISO 1524, insbesondere nach DIN EN ISO 1524:2013-06, bestimmt werden. Weiter kann die Partikelgröße, insbesondere die Partikelgrößenverteilung, auch mittels Transmissionselektronenmikroskopie bestimmt werden.

Ferner kann die Partikelgrößenverteilung über die d50- und/oder d90-Werte beschrieben werden. Vorteilhafterweise weisen die Füllstoffpartikel des erfindungsgemäßen Beschichtungsstoffes einen d50-Wert von weniger als 50 µm, insbesondere weniger als 30 µm, bevorzugt von 0,1 bis 20 µm, weiter bevorzugt von 0,5 bis 10 µm auf. Vorteilhafterweise weisen die Füllstoffpartikel des erfindungsgemäßen Beschichtungsstoffes einen d90-Wert von weniger als 150 µm, insbesondere weniger als 100 µm, bevorzugt von 0,3 bis 80 µm, weiter bevorzugt von 1 bis 50 µm auf. Bevorzugt werden die d50- und d90-Werte gemäß DIN ISO 9276-1:2004-09 (Darstellung der Ergebnisse von Partikelgrößenanalysen - Teil 1: grafische Darstellung) und ISO 9276-2:2014-05 (Darstellung der Ergebnisse von Partikelgrößenanalysen - Teil 2: Berechnung von mittleren Partikelgrößen/-durchmessern und Momenten aus Partikelgrößenverteilungen) ermittelt.

Gemäß einer weiteren bevorzugten Ausführungsform enthält der erfindungsgemäße Beschichtungsstoff, jeweils bezogen auf das Gesamtgewicht des Beschichtungsstoffes, 3 bis 70 Gew.-%, insbesondere 5 bis 40 Gew.-% oder 10 bis 25 Gew.-% Pigment. Insbesondere kann das Pigment ein anorganisches Pigment sein. Insbesondere ist das Pigment ausgewählt aus der Gruppe bestehend aus Titandioxid, Eisenoxidgelb, Bismutvanadat, Rutil-Zinn-Zink, Eisenoxidrot, Kobaltblau, Ultramarinblau, Chromoxidgrün, Kobaltgrün, Farbruß, Eisenoxidschwarz und Mischungen davon. Besonders bevorzugt ist das Pigment Titandioxid. Durch die Verwendung von Pigmenten können farbige Beschichtungsstoffe und Farbanstriche hergestellt werden, die je nach Pigment unterschiedliche gewünschte Bereiche des Farbspektrums abdecken können.

Weiter enthält der erfindungsgemäße Beschichtungsstoff, bezogen auf das Gesamtgewicht des Beschichtungsstoffes, 0,5 bis 25 Gew.-% Wasserglas (Feststoffanteil). Unter Wasserglas werden insbesondere aus Alkalicarbonat und Quarzsand hergestellte gut wasserlösliche Alkalisilikate verstanden.

Feststoffanteil bedeutet hier und an anderer Stelle (insbesondere auch im Zusammenhang mit Kieselsol), dass bei der Berechnung der Gew.-%-Menge der entsprechenden Komponente ausschließlich der nicht-wässrige Anteil der entsprechenden Komponente berücksichtigt wird. Beispielsweise, wenn ein erfindungsgemäßer Beschichtungsstoff ein Gesamtgewicht von 100 g aufweist, wobei er 10 g einer 30 Gew.-%-igen wässrigen Wasserglaslösung enthält, so enthält der Beschichtungsstoff, bezogen auf das Gesamtgewicht des Beschichtungsstoffes, 3 Gew.-% Wasserglas (Feststoffanteil).

Vorzugsweise enthält der erfindungsgemäße Beschichtungsstoff, jeweils bezogen auf das Gesamtgewicht des Beschichtungsstoffes, 1 bis 15 Gew.-%, insbesondere 1,5 bis 10 Gew.-% oder 2 bis 5 Gew.-% Wasserglas (jeweils Feststoffanteil). Gemeinsam mit dem Kieselsol scheint das Wasserglas für die hohe Lagerstabilität und die guten Verarbeitungseigenschaften des erfindungsgemäßen Beschichtungsstoffes, sowie die hohe Scheuerbeständigkeit daraus hergestellter Anstriche, verantwortlich zu sein. Zu geringe Mengen an Wasserglas verhindern dabei, dass diese positiven Effekte auftreten. Ein zu hoher Anteil an Wasserglas führt hingegen ebenfalls zu verschlechterten Verarbeitungseigenschaften.

Gemäß einer bevorzugten Ausführungsform des erfindungsgemäßen Beschichtungsstoffes ist das Wasserglas ein Wasserglas auf Basis von Kaliumsilicat, Lithiumsilicat und/oder Natriumsilicat, insbesondere ein Wasserglas auf Basis von Kaliumsilicat.

Das Wasserglas im erfindungsgemäßen Beschichtungsstoff weist ein Molverhältnis von SiO₂ zu Alkalioxid von 2,2 zu 1 bis 4,0 zu 1 auf. Besonders bevorzugt weist das Wasserglas im erfindungsgemäßen Beschichtungsstoff ein Molverhältnis von SiO₂ zu Alkalioxid von 2,5 zu 1 bis 3,8 zu 1, insbesondere von 2,8 zu 1 bis 3,5 zu 1 oder von 3,2 zu 1 bis 3,5 zu 1, auf. Bei einem zu hohen Molverhältnis von SiO₂ zu Alkalioxid kann es leichter zu einer Gelbildung und damit Verfestigung des Wasserglases kommen, so dass der Beschichtungsstoff schlechter verarbeitbar ist. Bei einem geringeren Molverhältnis von SiO₂ zu Alkalioxid besteht eine erhöhte Gefahr, dass es zu Alkaliauswaschung bei Wassereinwirkung kommt und dass es zu einer schlechteren Bindung zwischen Beschichtungsstoff und zu beschichtender Oberfläche kommt. Insbesondere bei saurem Regen oder Frost können sich Beschichtungen aus solchen Beschichtungsstoffen als weniger stabil erweisen.

Ferner enthält der erfindungsgemäße Beschichtungsstoff, bezogen auf das Gesamtgewicht des Beschichtungsstoffes, 0,5 bis 25 Gew.-% Kieselsol (Feststoffanteil). Unter Kieselsol werden insbesondere wässrige kolloidale Suspensionen nahezu kugelförmiger Polykieselsäure-Moleküle mit 30 % bis 60 % Siliciumdioxid verstanden. Insbesondere liegt das Siliciumdioxid in Form untereinander unvernetzter, kugelförmiger Einzelpartikel vor, die an der Oberfläche hydroxyliert sind. Bevorzugt liegt die Größe der Partikel im kolloiden Bereich, insbesondere von 5 nm bis 75 nm.

Für den Begriff Feststoffanteil gilt das vorstehend im Zusammenhang mit Wasserglas Geschriebene.

Vorzugsweise enthält der erfindungsgemäße Beschichtungsstoff, jeweils bezogen auf das Gesamtgewicht des Beschichtungsstoffes 1 bis 15 Gew.-%, insbesondere 1,5 bis 10 Gew.-% oder 2 bis 5 Gew.-% Kieselsol (jeweils Feststoffanteil). Gemeinsam mit dem Wasserglas scheint das Kieselsol für die hohe Lagerstabilität und die guten Verarbeitungseigenschaften des erfindungsgemäßen Beschichtungsstoffes, sowie die hohe Scheuerbeständigkeit daraus hergestellter Anstriche, verantwortlich zu sein. Zu geringe Mengen an Kieselsol verhindern dabei, dass diese positiven Effekte auftreten. Ein zu hoher Anteil an Kieselsol führt hingegen ebenfalls zu verschlechterten Verarbeitungseigenschaften.

Gemäß einer bevorzugten Ausführungsform des erfindungsgemäßen Beschichtungsstoffes beträgt das Massenverhältnis von Wasserglas zu Kieselsol (jeweils Feststoffanteil) in dem Beschichtungsstoff von 20:1 bis 1:20, insbesondere von 10:1 bis 1:10, von 5:1 bis 1:5, von 3:1 bis 1:3 oder von 1,1:1 bis 1:1,1. Ein solches Massenverhältnis sorgt für eine besonders gute Lagerstabilität und besonders gute Verarbeitungseigenschaften des erfindungsgemäßen Beschichtungsstoffes. Bei einem niedrigeren oder höheren Massenverhältnis von Wasserglas zu Kieselsol ist der Beschichtungsstoff entweder weniger lagerstabil und/oder schlechter geeignet, um Anstriche mit einer hohen Scheuerbeständigkeit zu erhalten.

Der erfindungsgemäße Beschichtungsstoff enthält weniger als 3 Gew.-% organische Bestandteile, bezogen auf das Gesamtgewicht des Beschichtungsstoffes. Unter organischen Bestandteilen werden insbesondere solche molekularen Verbindungen verstanden, die Kohlenstoff und Wasserstoff enthalten. Neben Kohlenstoff und Wasserstoff können Heteroatome, zum Beispiel Stickstoff und/oder Sauerstoff in diesen Verbindungen enthalten sein. Bei Verbindungen, die sowohl aus organischen als auch aus nicht-organischen Teilen bestehen (zum Beispiel organisch-modifiziertem Kieselsol), zählt jeweils nur der organische Teil der Verbindung als organischer Bestandteil. Unter dem organischen Teil einer Verbindung werden insbesondere alle Kohlenstoffatome sowie die Atome verstanden, die direkt an ein Kohlenstoffatom gebunden sind. So würde beispielsweise bei der Verbindung CH₃-O-Si(OH)₃ die Masse der CH₃-Gruppe und die Masse des an das Kohlenstoffatom gebundenen Sauerstoffatoms bei der Berechnung der Menge an organischen Bestandteilen berücksichtigt werden, nicht jedoch die Masse an Si(OH)₃.

Gemäß einer weiteren bevorzugten Ausführungsform enthält der erfindungsgemäße Beschichtungsstoff, jeweils bezogen auf das Gesamtgewicht des Beschichtungsstoffes weniger als 2,5 Gew.-%, insbesondere weniger als 2 Gew.-% oder weniger als 1,5 Gew.-% organische Bestandteile. Ein solch niedriger Anteil an organischen Bestandteilen sorgt für eine niedrige CO₂-Bilanz des Beschichtungsstoffes und dafür, dass bei seiner Herstellung wenige oder keine fossilen Rohstoffe und wenige oder keine kohlenstoffbasierten Rohstoffe verbraucht werden.

Gemäß einer besonders bevorzugten Ausführungsform enthält der erfindungsgemäße Beschichtungsstoff, jeweils bezogen auf das Gesamtgewicht des Beschichtungsstoffes, maximal 1 Gew.-%, insbesondere maximal 0,5 Gew.-%, maximal 0,1 Gew.-% oder keine organischen Filmbildner. Dadurch können weitere CO₂-Emissionen eingespart werden. Überraschenderweise weist der erfindungsgemäße Beschichtungsstoff auch ohne organische Filmbildner eine hohe Lagerfähigkeit und hervorragende Verarbeitungseigenschaften auf. Insbesondere ist ein solcher erfindungsgemäßer Beschichtungsstoff auch geeignet, um Anstriche herzustellen, die in die Scheuerklassen 1, 2 und/oder 3 nach DIN EN 13300 eingestuft werden können.

Gemäß einer bevorzugten Ausführungsform der Erfindung ist der erfindungsgemäße Beschichtungsstoff frei von Polymeren bzw. Copolymeren ausgewählt aus der Gruppe bestehend aus Polymeren von Acrylsäuren, Acrylsäurederivaten, Acrylsäureestern, Methacrylsäuren, Methacrylsäurederivaten, Methacrylsäureestern, Styrol, Styrolderivaten, N-Vinylpyrrolidon, Acrylnitril, Vinylacetat, Vinylpropionat, ethylenisch ungesättigten Carbonsäuren, ethylenisch ungesättigten Carbonsäureestern, ethylenisch ungesättigten Carbonsäureanhydriden, ethylenisch ungesättigten Carbonsäureamiden, Carbonsäurevinylestern, Vinylchlorid, Ethylen, Butadien, Polyvinylbutyral, Versatat und Vinylalkohol, sowie Mischungen davon. Die vorstehende Formulierung bedeutet, dass der erfindungsgemäße Beschichtungsstoff frei von einem, mehreren oder sämtlichen der aufgeführten Polymere bzw. Copolymere ist. Auch ohne solche organischen Polymere und Copolymere, die klassischerweise als Filmbildner in Dispersionsfarben und Dispersions-Silikatfarben eingesetzt werden, weist der erfindungsgemäße Beschichtungsstoff eine hohe Lagerfähigkeit und hervorragende Verarbeitungseigenschaften auf. Insbesondere ist ein solcher erfindungsgemäßer Beschichtungsstoff auch geeignet, um Anstriche herzustellen, die in die Scheuerklassen 1, 2 und/oder 3 nach DIN EN 13300 eingestuft werden können.

Gemäß einer bevorzugten Ausführungsform ist der erfindungsgemäße Beschichtungsstoff im Wesentlichen frei von Konservierungsmitteln. *"Im Wesentlichen frei von Konservierungsmitteln"* bedeutet dabei, dass der Beschichtungsstoff Konservierungsmittel höchstens in Spuren, insbesondere in einer Menge von weniger als 2 ppm enthält. Vorzugsweise ist der erfindungsgemäße Beschichtungsstoff frei von Bioziden, insbesondere von Isothiazolinen. Beispiele für Isothiazoline sind Methylisothiazolinon, Chlormethylisothiazolinon, Benzisothiazolinon, Octylisothiazolinon, Dichloroctylisothiazolinon und Butylbenzisothiazolinon. Vorzugsweise ist der Beschichtungsstoff frei von ([([(2-dihydro-5-methyl-3(2H)-oxazolyl)-1-methylethoxy]methoxy)methoxy]methanol. Auch ohne solche Konservierungsmittel und Biozide weist der erfindungsgemäße Beschichtungsstoff eine hohe Lagerstabilität über einen langen Zeitraum auf.

Weiter kann der erfindungsgemäße Beschichtungsstoff, jeweils bezogen auf das Gesamtgewicht des Beschichtungsstoffes, 0,01 bis 5 Gew.-%, insbesondere 0,05 bis 4 Gew.-% oder 0,1 bis 3 Gew.-% Additive, insbesondere Dispergier-, Netz-, Verdickungsmittel, Entschäumer und/oder Hydrophobierungsmittel, enthalten.

Beispiele für Verdickungsmittel sind Alkoholalkoxylate, Ethylenoxid-Propylenoxid-Copolymere, Maleinsäureanhydrid-Diisobutylen-Copolymere, Polyacryl- und Polymethacrylsäure und deren Salze, Methylcellulosen, Carboxymethylcellulosen, Hydroxymethylcellulosen, Methylhydroxyethylcellulose, Polyurethane, Alkalimetallphosphate, Xanthangummi und Salze modifizierter Phosphorsäuren, sowie deren Mischungen.

Beispiele für Entschäumer sind Polyglykole, Triglyceride, Polysiloxan-Polyether-Copolymere und Silikonöle.

Beispiele für Hydrophobierungsmittel sind insbesondere oligomere und polymere Siloxane und Silikonharze.

Gemäß einer weiteren bevorzugten Ausführungsform weist der erfindungsgemäße Beschichtungsstoff einen pH-Wert von 9,5 bis 13,0, insbesondere von 10,5 bis 12,0 oder von 10,5 bis kleiner 11,5 auf. Solche pH-Werte können die Lagerstabilität des Beschichtungsstoffes erhöhen, insbesondere wenn der Beschichtungsstoff im Wesentlichen frei von Konservierungsmitteln ist. Erfindungsgemäße Beschichtungsstoffe mit einem pH-Wert von 10,5 bis kleiner 11,5 haben den zusätzlichen Vorteil auch ohne besondere Vorkehrungen hinsichtlich des Arbeitsschutzes verwendet werden zu können.

Der pH-Wert kann beispielsweise durch Zugabe von alkalischen Substanzen, auch Alkalisteller genannt, genauer eingestellt werden. Beispiele für alkalische Substanzen sind Alkalimetallhydroxide wie Lithium-, Natrium- und/oder Kaliumhydroxid, Erdalkalimetallhydroxide wie Magnesium-, Calcium-, und/oder Bariumhydroxid, Ammoniumhydroxid, Xonotlit (6CaO·6SiO₂·H₂O) und/oder Ettringit (Ca₆[Al(OH)₆]₂(SO₄ x 26 H₂O)). Bevorzugt ist der Alkalisteller ein Alkalimetallhydroxid, insbesondere Kaliumhydroxid. Insbesondere kann der erfindungsgemäße Beschichtungsstoff, jeweils bezogen auf das Gesamtgewicht des Beschichtungsstoffes, 0,005 bis 1,5 Gew.-%, insbesondere 0,01 bis 1 Gew.-% oder 0,03 bis 0,5 Gew.-% Alkalisteller enthalten.

Gemäß einer weiteren bevorzugten Ausführungsform weist der erfindungsgemäße Beschichtungsstoff eine Viskosität von 2 000 bis 30 000 Pas, vorzugsweise von 8 000 bis 20 000 Pas, besonders bevorzugt von 12 000 bis 15 000 Pas, gemessen bei 20 °C und bei einer Schergeschwindigkeit von 3,28 s⁻¹ im Platte-Platte-Viskosimeter mit einer Platte-Platte-Messgeometrie mit einem Durchmesser von 50 mm, auf. Eine solche Viskosität ermöglicht eine besonders gute Verarbeitbarkeit des Beschichtungsstoffes, insbesondere beim Auftragen des Beschichtungsstoffes auf eine Substratoberfläche. Eine zu hohe Viskosität erschwert das Auftragen und die Verarbeitung des Beschichtungsstoffes. Eine zu niedrige Viskosität führt zu Spritzerneigung und verhindert ein gleichmäßiges Auftragen des Beschichtungsstoffes.

Vorzugsweise sind die Verarbeitungseigenschaften des erfindungsgemäßen Beschichtungsstoffes, insbesondere die nach Norm DIN EN 13300 bestimmten Kenndaten des Beschichtungsstoffes, in einem verschlossenen Behälter bei 22 °C über einen Zeitraum von mindestens 4 Wochen, insbesondere mindestens 8 Wochen, mindestens 16 Wochen, oder mindestens 52 Wochen im Wesentlichen konstant. Mit "*im Wesentlichen konstant"* ist gemeint, dass sich die entsprechenden Kenndaten höchstens um 30 %, insbesondere höchstens um 20 %, höchstens um 10 %, höchstens um 5 % oder höchstens im Rahmen der Messgenauigkeit der jeweiligen Messmethode über den jeweiligen Zeitraum verändern. Dies ermöglicht eine Lagerung des Beschichtungsstoffes über einen langen Zeitraum, ohne Einbußen bei der Qualität und den Verarbeitungseigenschaften und ohne Veränderungen der resultierenden Eigenschaften des aufgetragenen Anstrichs wie Oberflächenverlauf, Glanz, insbesondere Sheen, Rollrichtungsschattierungen und Härte.

Gemäß einer weiteren bevorzugten Ausführungsform des erfindungsgemäßen Beschichtungsstoffes ist die Viskosität, insbesondere die nach Norm DIN 53019 bestimmte Viskosität des Beschichtungsstoffes, in einem verschlossenen Behälter bei 22 °C über einen Zeitraum von mindestens 4 Wochen, insbesondere mindestens 8 Wochen, mindestens 16 Wochen oder mindestens 52 Wochen im Wesentlichen konstant. Mit "*im Wesentlichen konstant"* ist hier die Beibehaltung der guten Verarbeitungseigenschaften in Bezug auf die Konsistenz gemeint, insbesondere, dass sich die Viskosität höchstens um 50 %, höchstens um 30 %, höchstens um 10 %, höchstens um 5 % oder höchstens im Rahmen der Messgenauigkeit der jeweiligen Messmethode über den jeweiligen Zeitraum verändert. Ein Beschichtungsstoff mit einer konstanten Viskosität ermöglicht eine Lagerung des Beschichtungsstoffes über einen langen Zeitraum ohne Einbußen bei der Qualität und den Verarbeitungseigenschaften.

Besonders bevorzugt ist der erfindungsgemäße Beschichtungsstoff ein Einkomponenten-Silikat-Beschichtungsstoff. Im Gegensatz zu einem Mehrkomponenten-Beschichtungsstoff wie einer klassischen Zweikomponenten-Silikatfarbe, erfordert ein Einkomponenten-Beschichtungsstoff kein Anmischen des Beschichtungsstoffes am jeweiligen Auftragungsort. Stattdessen ist der erfindungsgemäße Beschichtungsstoff als Einkomponenten-Silikat-Beschichtungsstoff über einen langen Zeitraum lagerfähig und kann direkt am jeweiligen Auftragungsort verwendet werden.

Gemäß einer besonders bevorzugten Ausführungsform enthält der erfindungsgemäße Beschichtungsstoff
a1. 15 bis 40 Gew.-% Füllstoff,
a2. 10 bis 25 Gew.-% Pigment,
b. 2 bis 5 Gew.-% Wasserglas (Feststoffanteil),
c. 2 bis 5 Gew.-% Kieselsol (Feststoffanteil),
d. 0,1 bis 3 Gew.-% Dispergier-, Netz-, Verdickungsmittel, Entschäumer und/oder Hydrophobierungsmittel,
e. 0,03 bis 0,5 Gew.-% Alkalisteller und
f. Wasser.

Gemäß einer weiteren besonders bevorzugten Ausführungsform besteht der erfindungsgemäße Beschichtungsstoff aus
a1. 15 bis 40 Gew.-% Füllstoff,
a2. 10 bis 25 Gew.-% Pigment,
b. 2 bis 5 Gew.-% Wasserglas (Feststoffanteil),
c. 2 bis 5 Gew.-% Kieselsol (Feststoffanteil),
d. 0,1 bis 3 Gew.-% Dispergier-, Netz-, Verdickungsmittel, Entschäumer und/oder Hydrophobierungsmittel,
e. 0,03 bis 0,5 Gew.-% Alkalisteller und
f. Rest Wasser.

Die Summe aller Komponenten des erfindungsgemäßen Beschichtungsstoffes ergibt 100 Gew.-%, bezogen auf das Gesamtgewicht des Beschichtungsstoffes. Gemäß einer bevorzugten Ausführungsform des erfindungsgemäßen Beschichtungsstoffes werden die zu 100 Gew.-% fehlenden Mengenanteile durch Wasser ausgeglichen.

Die Erfindung stellt weiter ein Verfahren zur Herstellung eines erfindungsgemäßen Beschichtungsstoffes bereit, umfassend
i. Bereitstellen einer Zusammensetzung enthaltend, jeweils bezogen auf das Gesamtgewicht der Zusammensetzung,
   a. 5 bis 90 Gew.-% Füllstoff und/oder Pigment,
   b. 0,5 bis 25 Gew.-% Wasserglas (Feststoffanteil),
   c. 0,5 bis 25 Gew.-% Kieselsol (Feststoffanteil),
   d. Wasser,
ii. Mischen der Zusammensetzung,
wobei die Zusammensetzung weniger als 3 Gew.-% organische Bestandteile, bezogen auf das Gesamtgewicht der Zusammensetzung, enthält und wobei das Wasserglas ein Molverhältnis von SiO₂ zu Alkalioxid von 2,2 zu 1 bis 4,0 zu 1 aufweist. Ein solches Verfahren ermöglicht die schnelle und effiziente Herstellung eines Beschichtungsstoffes mit einer niedrigen CO₂-Bilanz und mit einem geringem oder ohne Verbrauch an fossilen Rohstoffen und mit einem geringen oder ohne Verbrauch an kohlenstoffbasierten Rohstoffen.

Das im Zusammenhang mit dem erfindungsgemäßen Beschichtungsstoff zum Füllstoff und/oder Pigment Gesagte gilt gleichermaßen auch für den Füllstoff und/oder das Pigment des erfindungsgemäßen Verfahrens.

Das im Zusammenhang mit dem erfindungsgemäßen Beschichtungsstoff zum Wasserglas Gesagte gilt gleichermaßen auch für das Wasserglas des erfindungsgemäßen Verfahrens.

Das im Zusammenhang mit dem erfindungsgemäßen Beschichtungsstoff zum Kieselsol Gesagte gilt gleichermaßen auch für das Kieselsol des erfindungsgemäßen Verfahrens.

Weiter kann das vorstehend für den erfindungsgemäßen Beschichtungsstoff Gesagte analog für die Zusammensetzung im erfindungsgemäßen Verfahren gelten. Insbesondere kann die Zusammensetzung des erfindungsgemäßen Verfahrens wie der erfindungsgemäße Beschichtungsstoff definiert sein.

Gegenstand der Erfindung ist ferner ein Anstrich, insbesondere Farbanstrich, auf einer Substratoberfläche, erhalten oder erhältlich durch Auftragen eines erfindungsgemäßen Beschichtungsstoffes oder eines nach dem erfindungsgemäßen Verfahren hergestellten Beschichtungsstoffes auf der Substratoberfläche. Ein solcher Anstrich zeigt eine sehr gute Haftung auf der Substratoberfläche. Weiter kann ein derartiger Anstrich, je nach Füllstoff und/oder Pigment, eine Vielzahl an optischen und haptischen Eigenschaften aufweisen. Ein solcher Anstrich, insbesondere Farbanstrich, weist eine hohe Scheuerbeständigkeit auf, insbesondere kann der Anstrich, insbesondere Farbanstrich, in die Scheuerklassen 1, 2 und/oder 3 nach DIN EN 13300 eingestuft werden.

Insbesondere handelt es sich bei der Substratoberfläche um eine mineralische Substratoberfläche.

Der erfindungsgemäße Beschichtungsstoff ist für verschiedene Verwendungen geeignet.

Gegenstand der Erfindung ist ferner die Verwendung eines erfindungsgemäßen Beschichtungsstoffes oder eines nach dem erfindungsgemäßen Verfahren hergestellten Beschichtungsstoffes als Farbe, insbesondere als Farbe für den Innen- und/oder Außenbereich. Eine solche Verwendung hat den Vorteil, dass der Beschichtungsstoff gute Verarbeitungseigenschaften aufweist, und sich gut im Innen- und/oder Außenbereich verwenden lässt, so dass ein Farbanstrich erhalten wird, der gut haftet, eine hohe Widerstandsfähigkeit gegen Wettereinflüsse aufweist und eine hohe Scheuerbeständigkeit aufweist.

Schließlich ist Gegenstand der Erfindung die Verwendung einer Mischung von Wasserglas und Kieselsol zur Erhöhung der Lagerstabilität von Beschichtungsstoffen.

Das Prinzip der Erfindung soll im Folgenden anhand von den Erfindungsgegenstand nicht einschränkenden Beispielen näher erläutert werden.

### Ausführungsbeispiele

### Beispiel 1: Herstellung eines Beschichtungsstoffes

Ein Beschichtungsstoff wurde durch Mischen der in Tabelle 1 wiedergegebenen Zusammensetzung hergestellt. Die Mengenangaben erfolgen jeweils in Gewichtsprozent, bezogen auf das Gesamtgewicht der Zusammensetzung. Die eingesetzten Mengen an Wasserglas, Kieselsol und Alkalisteller beschreiben jeweils nicht den Feststoffanteil, sondern das Gesamtgewicht (also einschließlich des Wassergehalts) des jeweiligen Bestandteils.

**Tabelle 1: Zusammensetzung**

| **Bestandteil** | **Menge [Gew.-%]** |
|---|---|
| Füllstoff | 28 |
| Pigment | 14 |
| Wasserglas, MVZ >3,2 (28 Gew.-% in Wasser) | 8 |
| Kieselsol (28 Gew.-% in Wasser) | 8 |
| Dispergiermittel | 0,52 |
| Verdickungsmittel | 1,65 |
| Entschäumer | 0,1 |
| Alkalisteller (50 Gew.-% in Wasser) | 0,15 |
| Wasser | 39,58 |

Der so hergestellte Beschichtungsstoff zeigte eine Lagerstabilität von mehr als 52 Wochen und ließ sich gut verarbeiten. Zudem ergab der Beschichtungsstoff nach dem Auftragen Oberflächen mit einem homogenen Gesamteindruck und einer hohen Scheuerbeständigkeit. Der pH-Wert des Beschichtungsstoffes betrug direkt nach seiner Herstellung 11,4 und nach einer Lagerzeit von 52 Wochen 11,3.

## Patentansprüche

1. Beschichtungsstoff enthaltend, jeweils bezogen auf das Gesamtgewicht des Beschichtungsstoffes,
a. 5 bis 90 Gew.-% Füllstoff und/oder Pigment,
b. 0,5 bis 25 Gew.-% Wasserglas (Feststoffanteil),
c. 0,5 bis 25 Gew.-% Kieselsol (Feststoffanteil),
d. Wasser,
wobei der Beschichtungsstoff weniger als 3 Gew.-% organische Bestandteile, bezogen auf das Gesamtgewicht des Beschichtungsstoffes, enthält und wobei das Wasserglas ein Molverhältnis von SiO₂ zu Alkalioxid von 2,2 zu 1 bis 4,0 zu 1 aufweist.

2. Beschichtungsstoff nach Anspruch 1, **dadurch gekennzeichnet, dass** der Beschichtungsstoff, jeweils bezogen auf das Gesamtgewicht des Beschichtungsstoffes, 5 bis 70 Gew.-%, insbesondere 10 bis 55 Gew.-% oder 15 bis 40 Gew.-% Füllstoff enthält,
und/oder
dass der Füllstoff ausgewählt ist aus der Gruppe bestehend aus Dolomit, Bariumsulfat, Feldspat, Quarz, Calciumcarbonat, Glimmer, Kaolin, kalziniertem Kaolin, Talkum, Diatomeenerde und Mischungen davon,
und/oder
dass der Füllstoff eine Mischung aus mindestens Calciumcarbonat und kalziniertem Kaolin ist.

3. Beschichtungsstoff nach einem der vorstehenden Ansprüche, **dadurch gekennzeichnet, dass** der Beschichtungsstoff, jeweils bezogen auf das Gesamtgewicht des Beschichtungsstoffes, 3 bis 70 Gew.-%, insbesondere 5 bis 40 Gew.-% oder 10 bis 25 Gew.-% Pigment enthält,
und/oder
dass das Pigment ausgewählt ist aus der Gruppe bestehend aus Titandioxid, Eisenoxidgelb, Bismutvanadat, Rutil-Zinn-Zink, Eisenoxidrot, Kobaltblau, Ultramarinblau, Chromoxidgrün, Kobaltgrün, Farbruß, Eisenoxidschwarz und Mischungen davon, insbesondere dass das Pigment Titandioxid ist.

4. Beschichtungsstoff nach einem der vorstehenden Ansprüche, **dadurch gekennzeichnet, dass** der Beschichtungsstoff, jeweils bezogen auf das Gesamtgewicht des Beschichtungsstoffes, 1 bis 15 Gew.-%, insbesondere 1,5 bis 10 Gew.-% oder 2 bis 5 Gew.-% Wasserglas (jeweils Feststoffanteil) enthält, und/oder
dass das Wasserglas ein Wasserglas auf Basis von Kaliumsilicat, Lithiumsilicat und/oder Natriumsilicat ist, insbesondere dass das Wasserglas ein Wasserglas auf Basis von Kaliumsilicat ist,
und/oder
dass das Wasserglas ein Molverhältnis von SiO₂ zu Alkalioxid von 2,5 zu 1 bis 3,8 zu 1, insbesondere von 2,8 zu 1 bis 3,5 zu 1 oder von 3,2 zu 1 bis 3,5 zu 1 aufweist.

5. Beschichtungsstoff nach einem der vorstehenden Ansprüche, **dadurch gekennzeichnet, dass** der Beschichtungsstoff, jeweils bezogen auf das Gesamtgewicht des Beschichtungsstoffes, 1 bis 15 Gew.-%, insbesondere 1,5 bis 10 Gew.-% oder 2 bis 5 Gew.-% Kieselsol (jeweils Feststoffanteil) enthält, und/oder
dass das Massenverhältnis von Wasserglas zu Kieselsol (jeweils Feststoffanteil) in dem Beschichtungsstoff von 20:1 bis 1:20, insbesondere von 10:1 bis 1:10, von 5:1 bis 1:5, von 3:1 bis 1:3 oder von 1,1:1 bis 1:1,1, beträgt.

6. Beschichtungsstoff nach einem der vorstehenden Ansprüche, **dadurch gekennzeichnet, dass** der Beschichtungsstoff, jeweils bezogen auf das Gesamtgewicht des Beschichtungsstoffes weniger als 2,5 Gew.-%, insbesondere weniger als 2 Gew.-% oder weniger als 1,5 Gew.-% organische Bestandteile enthält,
und/oder
dass der Beschichtungsstoff, jeweils bezogen auf das Gesamtgewicht des Beschichtungsstoffes, maximal 1 Gew.-%, insbesondere maximal 0,5 Gew.-%, maximal 0,1 Gew.-% oder keine organischen Filmbildner enthält,
und/oder
dass der Beschichtungsstoff frei von Polymeren und Copolymeren ausgewählt aus der Gruppe bestehend aus Polymeren von Acrylsäuren, Acrylsäurederivaten, Acrylsäureestern, Methacrylsäuren, Methacrylsäurederivaten, Methacrylsäureestern, Styrol, Styrolderivaten, N-Vinylpyrrolidon, Acrylnitril, Vinylacetat, Vinylpropionat, ethylenisch ungesättigten Carbonsäuren, ethylenisch ungesättigten Carbonsäureestern, ethylenisch ungesättigten Carbonsäureanhydriden, ethylenisch ungesättigten Carbonsäureamiden, Carbonsäurevinylestern, Vinylchlorid, Ethylen, Butadien, Polyvinylbutyral, Versatat und Vinylalkohol, sowie Mischungen davon, ist,
und/oder
dass der Beschichtungsstoff im Wesentlichen frei von Konservierungsmitteln ist.

7. Beschichtungsstoff nach einem der vorstehenden Ansprüche, **dadurch gekennzeichnet, dass** der Beschichtungsstoff, jeweils bezogen auf das Gesamtgewicht des Beschichtungsstoffes, 0,01 bis 5 Gew.-%, insbesondere 0,05 bis 4 Gew.-% oder 0,1 bis 3 Gew.-% Additive, insbesondere Dispergier-, Netz-, Verdickungsmittel, Entschäumer und/oder Hydrophobierungsmittel, enthält.

8. Beschichtungsstoff nach einem der vorstehenden Ansprüche, **dadurch gekennzeichnet, dass** der Beschichtungsstoff einen pH-Wert von 9,5 bis 13,0, insbesondere von 10,5 bis 12,0 oder von 10,5 bis kleiner 11,5 aufweist.

9. Beschichtungsstoff nach einem der vorstehenden Ansprüche, **dadurch gekennzeichnet, dass** der Beschichtungsstoff eine Viskosität von 2 000 bis 30 000 Pas, vorzugsweise von 8 000 bis 20 000 Pas, besonders bevorzugt von 12 000 bis 15 000 Pas, gemessen bei 20 °C und bei einer Schergeschwindigkeit von 3,28 s⁻¹ im Platte-Platte-Viskosimeter mit einer Platte-Platte-Messgeometrie mit einem Durchmesser von 50 mm, aufweist,
und/oder
**dadurch gekennzeichnet, dass** die Verarbeitungseigenschaften des Beschichtungsstoffes, insbesondere die nach Norm DIN EN 13300 bestimmten Kenndaten des Beschichtungsstoffes, in einem verschlossenen Behälter bei 22 °C über einen Zeitraum von mindestens 4 Wochen, insbesondere mindestens 8 Wochen, mindestens 16 Wochen, oder mindestens 52 Wochen im Wesentlichen konstant sind,
und/oder
**dadurch gekennzeichnet, dass** die Viskosität, insbesondere die nach Norm DIN 53019 bestimmte Viskosität des Beschichtungsstoffes, in einem verschlossenen Behälter bei 22 °C über einen Zeitraum von mindestens 4 Wochen, insbesondere mindestens 8 Wochen, mindestens 16 Wochen oder mindestens 52 Wochen im Wesentlichen konstant ist.

10. Beschichtungsstoff nach einem der vorstehenden Ansprüche, **dadurch gekennzeichnet, dass** der Beschichtungsstoff ein Einkomponenten-Silikat-Beschichtungsstoff ist.

11. Verfahren zur Herstellung eines Beschichtungsstoffes nach einem der Ansprüche 1 bis 10, umfassend
i. Bereitstellen einer Zusammensetzung enthaltend, jeweils bezogen auf das Gesamtgewicht der Zusammensetzung,
a. 5 bis 90 Gew.-% Füllstoff und/oder Pigment,
b. 0,5 bis 25 Gew.-% Wasserglas (Feststoffanteil),
c. 0,5 bis 25 Gew.-% Kieselsol (Feststoffanteil),
d. Wasser,
ii. Mischen der Zusammensetzung,
wobei die Zusammensetzung weniger als 3 Gew.-% organische Bestandteile, bezogen auf das Gesamtgewicht der Zusammensetzung, enthält und wobei das Wasserglas ein Molverhältnis von SiO₂ zu Alkalioxid von 2,2 zu 1 bis 4,0 zu 1 aufweist.

12. Verfahren nach Anspruch 11, **dadurch gekennzeichnet, dass** der Füllstoff und/oder das Pigment, das Wasserglas und/oder das Kieselsol wie in einem der Ansprüche 1 bis 10 definiert ist und/oder dass die Zusammensetzung wie der Beschichtungsstoff in einem der Ansprüche 1 bis 10 definiert ist.

13. Anstrich, insbesondere Farbanstrich, auf einer Substratoberfläche, erhalten oder erhältlich durch Auftragen eines Beschichtungsstoffes nach einem der Ansprüche 1 bis 10 oder eines nach dem Verfahren gemäß Anspruch 11 oder 12 hergestellten Beschichtungsstoffes auf der Substratoberfläche.

14. Verwendung eines Beschichtungsstoffes nach einem der Ansprüche 1 bis 10 oder eines nach dem Verfahren gemäß Anspruch 11 oder 12 hergestellten Beschichtungsstoffes als Farbe, insbesondere als Farbe für den Innen- und/oder Außenbereich.

15. Verwendung einer Mischung von Wasserglas und Kieselsol zur Erhöhung der Lagerstabilität von Beschichtungsstoffen nach einem der Ansprüche 1 bis 10.

## Claims

1. Coating material containing, in each case based on the total weight of the coating material,
a. 5 to 90 wt.% of filler and/or pigment,
b. 0.5 to 25 wt.% of water glass (solids content),
c. 0.5 to 25 wt.% of silica sol (solids content),
d. water,
wherein the coating material contains less than 3 wt.% of organic components, based on the total weight of the coating material, and wherein the water glass has a molar ratio of SiO₂ to alkali oxide of from 2.2:1 to 4.0:1.

2. Coating material according to claim 1, **characterized in that** the coating material, in each case based on the total weight of the coating material, contains 5 to 70 wt.%, in particular 10 to 55 wt.% or 15 to 40 wt.%, of filler, and/or
**in that** the filler is selected from the group consisting of dolomite, barium sulfate, feldspar, quartz, calcium carbonate, mica, kaolin, calcined kaolin, talc, diatomaceous earth, and mixtures thereof,
and/or
**in that** the filler is a mixture of at least calcium carbonate and calcined kaolin.

3. Coating material according to either of the preceding claims,
**characterized in that** the coating material, in each case based on the total weight of the coating material, contains 3 to 70 wt.%, in particular 5 to 40 wt.% or 10 to 25 wt.%, of pigment,
and/or
**in that** the pigment is selected from the group consisting of titanium dioxide, iron oxide yellow, bismuth vanadate, rutile tin zinc, iron oxide red, cobalt blue, ultramarine blue, chrome oxide green, cobalt green, carbon black, iron oxide black and mixtures thereof, in particular **in that** the pigment is titanium dioxide.

4. Coating material according to any of the preceding claims,
**characterized in that** the coating material, in each case based on the total weight of the coating material, contains 1 to 15 wt.%, in particular 1.5 to 10 wt.% or 2 to 5 wt.%, of water glass (solids content in each case), and/or
**in that** the water glass is a water glass based on potassium silicate, lithium silicate and/or sodium silicate, in particular **in that** the water glass is a water glass based on potassium silicate,
and/or
**in that** the water glass has a molar ratio of SiO₂ to alkali oxide of from 2.5:1 to 3.8:1, in particular from 2.8:1 to 3.5:1 or from 3.2:1 to 3.5:1.

5. Coating material according to any of the preceding claims,
**characterized in that** the coating material, in each case based on the total weight of the coating material, contains 1 to 15 wt.%, in particular 1.5 to 10 wt.% or 2 to 5 wt.%, of silica sol (solids content in each case), and/or
**in that** the mass ratio of water glass to silica sol (solids content in each case) in the coating material is from 20:1 to 1:20, in particular from 10:1 to 1:10, from 5:1 to 1:5, from 3:1 to 1:3 or from 1.1:1 to 1:1.1.

6. Coating material according to any of the preceding claims,
**characterized in that** the coating material, in each case based on the total weight of the coating material, contains less than 2.5 wt.%, in particular less than 2 wt.% or less than 1.5 wt.%, of organic components,
and/or
**in that** the coating material, in each case based on the total weight of the coating material, contains at most 1 wt.%, in particular at most 0.5 wt.%, at most 0.1 wt.% or no organic film formers,
and/or
**in that** the coating material is free of polymers and copolymers selected from the group consisting of polymers of acrylic acids, acrylic acid derivatives, acrylic acid esters, methacrylic acids, methacrylic acid derivatives, methacrylic acid esters, styrene, styrene derivatives, N-vinylpyrrolidone, acrylonitrile, vinyl acetate, vinyl propionate, ethylenically unsaturated carboxylic acids, ethylenically unsaturated carboxylic acid esters, ethylenically unsaturated carboxylic acid anhydrides, ethylenically unsaturated carboxylic acid amides, carboxylic acid vinyl esters, vinyl chloride, ethylene, butadiene, polyvinyl butyral, versatate and vinyl alcohol, and mixtures thereof,
and/or
**in that** the coating material is substantially free of preservatives.

7. Coating material according to any of the preceding claims,
**characterized in that** the coating material, in each case based on the total weight of the coating material, contains 0.01 to 5 wt.%, in particular 0.05 to 4 wt.% or 0.1 to 3 wt.% of additives, in particular dispersing agents, wetting agents, thickening agents, defoamers and/or hydrophobing agents.

8. Coating material according to any of the preceding claims,
**characterized in that** the coating material has a pH of from 9.5 to 13.0, in particular from 10.5 to 12.0 or from 10.5 to less than 11.5.

9. Coating material according to any of the preceding claims,
**characterized in that** the coating material has a viscosity of from 2,000 to 30,000 Pas, preferably from 8,000 to 20,000 Pas, particularly preferably from 12,000 to 15,000 Pas, measured at 20°C and at a shear rate of 3.28 s⁻¹ in a plate-plate viscometer with a plate-plate measuring geometry with a diameter of 50 mm,
and/or
**characterized in that** the processing properties of the coating material, in particular the characteristics of the coating material determined in accordance with standard DIN EN 13300, remain substantially constant in a sealed container at 22°C for a period of at least 4 weeks, in particular at least 8 weeks, at least 16 weeks, or at least 52 weeks,
and/or
**characterized in that** the viscosity, in particular the viscosity of the coating material determined in accordance with standard DIN 53019, is substantially constant in a sealed container at 22°C for a period of at least 4 weeks, in particular at least 8 weeks, at least 16 weeks or at least 52 weeks.

10. Coating material according to any of the preceding claims,
**characterized in that** the coating material is a single-component silicate coating material.

11. Method for producing a coating material according to any of claims 1 to 10, comprising
i. providing a composition containing, in each case based on the total weight of the composition,
a. 5 to 90 wt.% of filler and/or pigment,
b. 0.5 to 25 wt.% of water glass (solids content),
c. 0.5 to 25 wt.% of silica sol (solids content),
d. water,
ii. mixing the composition,
wherein the composition contains less than 3 wt.% of organic components, based on the total weight of the composition, and wherein the water glass has a molar ratio of SiO₂ to alkali oxide of from 2.2:1 to 4.0:1.

12. Method according to claim 11, **characterized in that** the filler and/or the pigment, the water glass and/or the silica sol is as defined in any of claims 1 to 10, and/or **in that** the composition is defined in the same way as the coating material in any of claims 1 to 10.

13. Coating, in particular a paint coating, on a substrate surface, which is or can be obtained by applying a coating material according to any of claims 1 to 10 or a coating material produced according to the method according to claim 11 or 12 to the substrate surface.

14. Use of a coating material according to any of claims 1 to 10 or of a coating material produced according to the method according to claim 11 or 12 as a paint, in particular as a paint for indoor and/or outdoor use.

15. Use of a mixture of water glass and silica sol to increase the storage stability of coating materials according to any of claims 1 to 10.

## Revendications

1. Produit de revêtement contenant, respectivement par rapport au poids total du produit de revêtement,
a. 5 à 90 % en poids de charge et/ou de pigment,
b. 0,5 à 25 % en poids de silicate de soude (teneur en matières solides),
c. 0,5 à 25 % en poids de sol de silice (teneur en matières solides),
d. de l'eau,
dans lequel le produit de revêtement contient moins de 3 % en poids de composants organiques, par rapport au poids total du produit de revêtement, et dans lequel le silicate de soude présente un rapport molaire de SiO₂ à l'oxyde alcalin allant de 2,2 à 1 à 4,0 à 1.

2. Produit de revêtement selon la revendication 1, **caractérisé en ce que** le produit de revêtement contient, respectivement par rapport au poids total du produit de revêtement, 5 à 70 % en poids, en particulier 10 à 55 % en poids ou 15 à 40 % en poids, de charge,
et/ou
**en ce que** la charge est choisie dans le groupe constitué de dolomite, sulfate de baryum, feldspath, quartz, carbonate de calcium, mica, kaolin, kaolin calciné, talc, terre de diatomée et mélanges de ceux-ci,
et/ou
**en ce que** la charge est un mélange d'au moins carbonate de calcium et de kaolin calciné.

3. Produit de revêtement selon l'une des revendications précédentes,
**caractérisé en ce que** le produit de revêtement contient, respectivement par rapport au poids total du produit de revêtement, 3 à 70 % en poids, en particulier 5 à 40 % en poids ou 10 à 25 % en poids, de pigment,
et/ou
**en ce que** le pigment est choisi dans le groupe constitué de dioxyde de titane, oxyde de fer jaune, vanadate de bismuth, rutile-étain-zinc, oxyde de fer rouge, bleu de cobalt, bleu outremer, oxyde de chrome vert, vert de cobalt, noir de carbone, oxyde de fer noir et mélanges de ceux-ci, en particulier **en ce que** le pigment est du dioxyde de titane.

4. Produit de revêtement selon l'une des revendications précédentes,
**caractérisé en ce que** le produit de revêtement contient, respectivement par rapport au poids total du produit de revêtement, 1 à 15 % en poids, en particulier 1,5 à 10 % en poids ou 2 à 5 % en poids, de silicate de soude (teneur en matières solides respectivement),
et/ou
**en ce que** le silicate de soude est un silicate de soude à base de silicate de potassium, de silicate de lithium et/ou de silicate de sodium, en particulier **en ce que** le silicate de soude est un silicate de soude à base de silicate de potassium,
et/ou
**en ce que** le silicate de soude présente un rapport molaire de SiO₂ à l'oxyde alcalin allant de 2,5 à 1 à 3,8 à 1, en particulier de 2,8 à 1 à 3,5 à 1 ou de 3,2 à 1 à 3,5 à 1.

5. Produit de revêtement selon l'une des revendications précédentes,
**caractérisé en ce que** le produit de revêtement contient, respectivement par rapport au poids total du produit de revêtement, 1 à 15 % en poids, en particulier 1,5 à 10 % en poids ou 2 à 5 % en poids, de sol de silice (teneur en matières solides respectivement),
et/ou
**en ce que** le rapport massique du silicate de soude au sol de silice (teneur en matières solides respectivement) dans le produit de revêtement va de 20:1 à 1:20, en particulier de 10:1 à 1:10, de 5:1 à 1:5, de 3:1 à 1:3 ou de 1,1:1 à 1:1,1.

6. Produit de revêtement selon l'une des revendications précédentes,
**caractérisé en ce que** le produit de revêtement contient, respectivement par rapport au poids total du produit de revêtement, moins de 2,5 % en poids, en particulier moins de 2 % en poids ou moins de 1,5 % en poids, de composants organiques,
et/ou
**en ce que** le produit de revêtement contient, respectivement par rapport au poids total du produit de revêtement, au maximum 1 % en poids, en particulier au maximum 0,5 % en poids, au maximum 0,1 % en poids, d'agent filmogène organique, ou n'en contient pas,
et/ou
**en ce que** le produit de revêtement est exempt de polymères et de copolymères choisis dans le groupe constitué de polymères d'acides acryliques, dérivés d'acides acryliques, esters d'acides acryliques, acides méthacryliques, dérivés d'acides méthacryliques, esters d'acides méthacryliques, styrène, dérivés de styrène, N-vinylpyrrolidone, acrylonitrile, acétate de vinyle, propionate de vinyle, acides carboxyliques éthyléniquement insaturés, esters d'acides carboxyliques éthyléniquement insaturés, anhydrides d'acides carboxyliques éthyléniquement insaturés, amides d'acides carboxyliques éthyléniquement insaturés, esters vinyliques d'acides carboxyliques, chlorure de vinyle, éthylène, butadiène, polyvinylbutyral, versatat et alcool vinylique, ainsi que mélanges de ceux-ci, et/ou
**en ce que** le produit de revêtement est sensiblement exempt d'agents de conservation.

7. Produit de revêtement selon l'une des revendications précédentes,
**caractérisé en ce que** le produit de revêtement contient, respectivement par rapport au poids total du produit de revêtement, 0,01 à 5 % en poids, en particulier 0,05 à 4 % en poids ou 0,1 à 3 % en poids, d'additifs, en particulier d'agents dispersants, agents mouillants, épaississants, antimoussants et/ou agents hydrophobes.

8. Produit de revêtement selon l'une des revendications précédentes,
**caractérisé en ce que** le produit de revêtement présente un pH allant de 9,5 à 13,0, en particulier de 10,5 à 12,0 ou de 10,5 à moins de 11,5.

9. Produit de revêtement selon l'une des revendications précédentes,
**caractérisé en ce que** le produit de revêtement présente une viscosité allant de 2000 à 30 000 Pa·s, de préférence de 8000 à 20 000 Pa·s, de manière particulièrement préférée de 12 000 à 15 000 Pa·s, mesurée à 20 °C et à une vitesse de cisaillement de 3,28 s⁻¹ dans un viscosimètre plaque-plaque avec une géométrie de mesure plaque-plaque d'un diamètre de 50 mm, et/ou
**caractérisé en ce que** les propriétés de traitement du produit de revêtement, en particulier les caractéristiques du produit de revêtement déterminées selon la norme DIN EN 13300, sont sensiblement constantes dans un récipient fermé à 22 °C pendant une période d'au moins 4 semaines, en particulier d'au moins 8 semaines, d'au moins 16 semaines ou d'au moins 52 semaines,
et/ou
**caractérisé en ce que** la viscosité, en particulier la viscosité du produit de revêtement déterminée selon la norme DIN 53019, reste sensiblement constante dans un récipient fermé à 22 °C pendant une période d'au moins 4 semaines, en particulier d'au moins 8 semaines, d'au moins 16 semaines ou d'au moins 52 semaines.

10. Produit de revêtement selon l'une des revendications précédentes,
**caractérisé en ce que** le produit de revêtement est un produit de revêtement de silicate à un composant.

11. Procédé pour la fabrication d'un produit de revêtement selon l'une des revendications 1 à 10, comprenant
i. la fourniture d'une composition contenant, respectivement par rapport au poids total de la composition,
a. 5 à 90 % en poids de charge et/ou de pigment,
b. 0,5 à 25 % en poids de silicate de soude (teneur en matières solides),
c. 0,5 à 25 % en poids de sol de silice (teneur en matières solides),
d. de l'eau,
ii. le mélange de la composition,
dans lequel la composition contient moins de 3 % en poids de composants organiques, par rapport au poids total de la composition, et dans lequel le silicate de soude présente un rapport molaire de SiO₂ à l'oxyde alcalin allant de 2,2 à 1 à 4,0 à 1.

12. Procédé selon la revendication 11, **caractérisé en ce que** la charge et/ou le pigment, le silicate de soude et/ou le sol de silice sont tels que définis dans l'une des revendications 1 à 10 et/ou **en ce que** la composition est telle que le produit de revêtement dans l'une des revendications 1 à 10.

13. Couche, en particulier couche de peinture, sur une surface de substrat, obtenue ou pouvant être obtenue par application sur la surface de substrat d'un produit de revêtement selon l'une des revendications 1 à 10 ou d'un produit de revêtement fabriqué selon le procédé selon la revendication 11 ou 12.

14. Utilisation d'un produit de revêtement selon l'une des revendications 1 à 10 ou d'un produit de revêtement fabriqué selon le procédé selon la revendication 11 ou 12 comme couleur, en particulier comme couleur pour la zone intérieure et/ou extérieure.

15. Utilisation d'un mélange de silicate de soude et de sol de silice pour améliorer la stabilité au stockage de produits de revêtement selon l'une des revendications 1 à 10.
